# EUROPÄISCHE PATENTSCHRIFT

(11) **EP 2 035 726 B1**
(45) Veröffentlichungstag und Bekanntmachung des Hinweises auf die Patenterteilung: **08.09.2010**
(21) Anmeldenummer: 07764791.5
(22) Anmeldetag: 22.06.2007
(51) Int. Cl.: F16H 59/70, F16H 61/28

(54) **ANORDNUNG VON POSITIONSGEBERN AN EINER SCHALTSTANGE**
ARRANGEMENT OF POSITION TRANSMITTERS ON A SELECTOR ROD
ENSEMBLE DE TRANSMETTEURS DE POSITION FIXÉS SUR UNE TRINGLE DE CHANGEMENT DE VITESSES

(30) Priorität: 23.06.2006 DE 102006028785
(43) Veröffentlichungstag der Anmeldung: 18.03.2009
(73) Patentinhaber: Audi AG, 85045 Ingolstadt (DE)
(72) Erfinder: MEIXNER, Christian, 85049 Ingolstadt (DE); SCHENKER, Mario, 85049 Ingolstadt (DE); MÄRKL, Johann, 85049 Ingolstadt (DE)
(74) Vertreter: Lehle, Josef
(86) Internationale Anmeldenummer: PCT/EP2007/005522
(87) Internationale Veröffentlichungsnummer: WO 2007/147615

(56) Entgegenhaltungen:
- DE-A1- 3 314 111
- DE-A1- 19 961 087
- JP-A- 61 084 445
- US-A- 5 038 627

## Beschreibung

Die Erfindung betrifft eine Anordnung von Positionsgebern an einer Schaltstange für automatisierte Geschwindigkeits-Wechselgetriebe in Kraftfahrzeugen, gemäß dem Oberbegriff des Patentanspruches 1.

Eine derartige Anordnung beschreibt die DE 33 14 111 A1, bei der zwei tassenförmige Positionsgeber an einem Endbereich der Schaltstange auf einem angeformten Führungsabschnitt unter Zwischenschaltung einer Druckfeder und über eine Schraubverbindung gehalten sind. Dies erfordert einen beträchtlichen zusätzlichen Einbauraum und Montageaufwand an dem Wechselgetriebe.

Die DE 19 961 087 A1 zeigt eine Schaltstange mit integrierten Positionsgebern, welche an Bechalb des Getriebes in einer Schalteinrichtung gelagert ist.

Aufgabe der Erfindung ist es, eine Anordnung der gattungsgemäßen Art vorzuschlagen, die baulich und fertigungstechnisch günstiger ist und eine einfache Montage der Anordnung ermöglicht.

Diese Aufgabe wird erfindungsgemäß mit den Merkmalen des Patentanspruches 1 gelöst. Vorteilhafte Weiterbildungen der Erfindung beinhalten die weiteren Patentansprüche.

Erfindungsgemäß wird vorgeschlagen, dass die Schaltstange durch eine Durchgangsbohrung in einer ölraumtrennenden Querwand des Wechselgetriebes in einen zumindest die Gangstelleinheit und die Positionssensoren aufnehmenden Getrieberaum einragt und dass die Positionsgeber an der Schaltstange derart unmittelbar befestigt sind, dass die Schaltstange mit den Positionsgebern durch die Durchgangsbohrung hindurch als Montageeinheit montierbar ist. Damit können die Positionsgeber an der Schaltstange fertigungstechnisch günstig befestigt und als Baueinheit mit der Schaltstange im Getriebe montiert werden.

Die Schaltstange kann dabei in baulich einfacher Weise in der Durchgangsbohrung der Querwand mittels einer aufgespritzten Kunststoffbüchse verschiebbar gelagert und abgedichtet sein.

Ferner können die Positionsgeber zwischen endseitigen Anschlussmitteln der Schaltstange an der Gangstelleinheit und der besagten Querwand vorgesehen sein, woraus eine in axialer Richtung besonders kurz bauende Konstruktion geschaffen ist.

Die Positionsgeber können bevorzugt durch zwei Permanentmagnete gebildet sein, die auf einem gemeinsamen Polblech angeordnet sind und formschlüssig über eine Ausnehmung mit einem an der Schaltstange ausgebildeten Vorsprung zusammenwirken. Daraus resultiert mit baulich einfachen Mittels eine zuverlässige und präzise Positionierung der Positionsgeber zur Schaltstange. Alternativ dazu können die Positionsgeber aber auch durch lokale, magnetisierte Schaltstangenbereiche gebildet sein, die so ausgebildet sein müssen, dass die Feldstärke dort nicht in Verbindung mit benachbarten Bereichen zerfließt, sondern einen definierten, lokal eingegrenzten Bereich ausbildet. Als weitere alternative Möglichkeit kann der bzw. die Positionsgeber auch durch Anspritzen von Kunststoffmaterial oder dergleichen ausgebildet sein, in dem Magnetpartikel zur Ausbildung eines lokalen Magnetbereiches vorhanden sind.

Des weiteren kann eine mit dem Polblech verbundene, dünnwandige Schutzkappe die Permanentmagnete abdecken und somit gegebenenfalls Signalstörungen der Gangerkennungsschaltung vermeiden.

Alternative oder kombinierte Befestigungsverfahren zwischen der Schaltstange und dem Polblech sehen vor, dass das Polblech der Positionsgeber mit der Schaltstange verschweißt und/oder verklebt und/oder verstemmt ist. Die Permanentmagnete sind mit dem Polblech herstellungstechnisch bereits fest verbunden.

Alternativ oder zusätzlich können die Positionsgeber an der Schaltgabel durch Umspritzen mit einer Kunststoffummantelung gehalten sein. Die besagte Schutzkappe kann dann entfallen. Fertigungstechnisch besonders günstig kann dabei die Kunststoffummantelung einstückig mit der Kunststoffbüchse zur Lagerung der Schaltstange in der Querwand ausgeführt sein.

Ferner können in an sich bekannter Weise die Schaltstangen im Querschnitt bevorzugt rechteckförmig ausgeführt sein, wobei dann die Positionsgeber baulich und fertigungstechnisch günstig an einer Schmalseite der Schaltstange befestigt sind.

Bei einem automatisierten Geschwindigkeits-Wechselgetriebe mit bis zu sechs Vorwärtsgänge können bevorzugt drei Schaltstangen für Vorwärtsgänge und eine Schaltstange für einen Rückwärtsgang durch die ölraumtrennende Querwand in entsprechenden Durchgangsbohrungen hindurchgeführt sein, wobei die jeweils unmittelbar befestigten Positiongeber im wesentlichen in einer einheitlichen Messebene der gehäusefesten Positionssensoren liegen. Dies ermöglicht eine ggf. einteilige Ausführung aller Positionssensoren mit einer damit verbundenen einfacheren Fertigung (innere Verschaltung) und Montage im Getriebe.

Ein Ausführungsbeispiel der Erfindung ist im folgenden mit weiteren Einzelheiten näher erläutert. Die schematische Zeichnung zeigt in:
- Fig. 1: eine schematische Ansicht eines Antriebsaggregates für Kraftfahr- zeuge mit automatisiertem Geschwindigkeits-Wechselgetriebe, mit einer eine ölraumtrennende Querwand durchdringenden Schalt- stange; und
- Fig. 2: eine detaillierte Ansicht der Schaltstange gemäß Fig. 1 im Bereich der Querwand und mit unmittelbar befestigten Positionsgebern, die zwischen einer Gangstelleinheit und der Querwand vorgesehen sind.

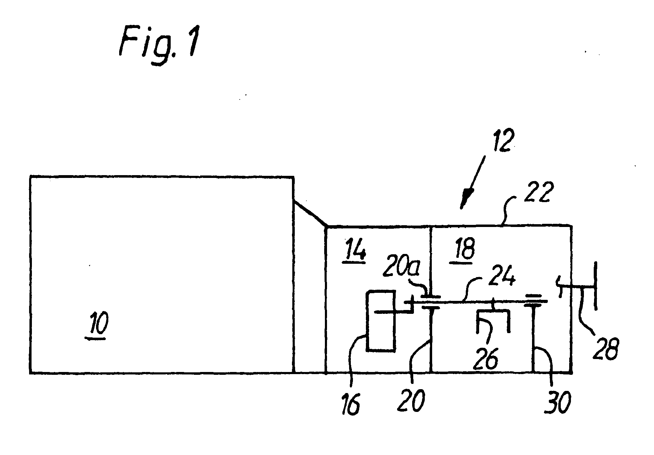

Die Fig. 1 zeigt als Übersichtsskizze ein Antriebsaggregat für Kraftfahrzeuge mit einer Brennkraftmaschine 10 und einem nachgeschafteten Geschwindigkeits-Wechselgetriebe 12. Die Aggregate 10, 12 können soweit nicht beschrieben bekannter Bauart sein.

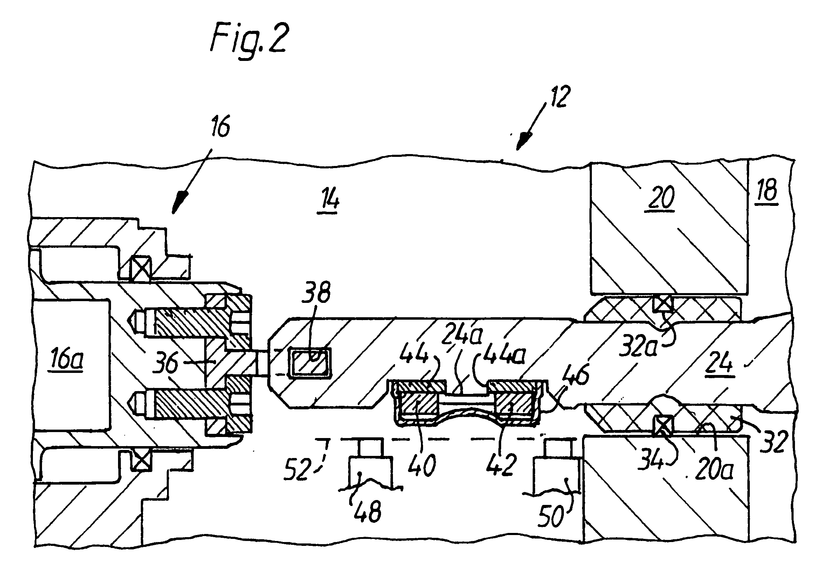

In dem als automatisiertes Schaltgetriebe ausgeführten Wechselgetriebe 12 sind in einem ersten Getrieberaum 14 nicht näher beschriebene Kupplungseinrichtungen (z. B. eine hydraulisch betätigte Doppelkupplung), elektrohydraulische Steuerungseinrichtungen bzw. Gangstelleinheiten 16 und Positionsgeber bzw. Positionssensoren gemäß Fig. 2 angeordnet.

In dem zweiten Getrieberaum 18, der durch eine ölraumtrennende Querwand 20 des Gehäuses 22 des Wechselgetriebes 12 abgeteilt ist, sind in nicht ersichtlicher Weise die Getriebewellen, die zur Bildung der Übersetzungsstufen erforderlichen Zahnradsätze, Synchronkupplungen etc. positioniert.

Ferner sind im Wechselgetriebe 12 Schaltstangen 24 (es ist nur eine Schaltstange 24 dargestellt) verschiebbar gelagert, die in bekannter Weise Schaltgabeln 26 tragen und mit den Synchronkupplungen des Wechselgetriebes 12 in bekannter Weise zur Schaltung von Übersetzungsstufen zusammenwirken. Die Schaltstangen 24 sind innerhalb des Getrieberaumes 14 mit den Gangstelleinheiten 16 verbunden und können somit aus einer Neutralstellung heraus in beide Verschieberichtungen verstellt werden.

Der Abtrieb zu den angetriebenen Rädern des Kraftfahrzeuges kann über eine Ausgangswelle 28 des Wechselgetriebes 12 und/oder über ein nicht dargestelltes, vorderes Differenzial erfolgen.

Die Schaltstangen 24 sind in Durchgangsbohrungen 20a der ölraumtrennenden Querwand 20 und anderenends in einer (oder mehreren) Querwand 30 des Gehäuses 22 des Wechselgetriebes 12 axial verschiebbar gelagert.

In den Getrieberäumen 14, 18 kann unterschiedliches Getriebe- oder Hydrauliköl eingefüllt sein, so dass an den durchgeführten Getriebewellen und Schaltstangen 24 entsprechende Lagerungen und Abdichtungen vorgesehen sind.

Gemäß Fig. 2 ist die nur teilweise dargestellte Schaltstange 24 in der Querwand 20 über eine auf die Schaltstange 24 aufgespritzte Kunststoffbüchse 32 mit rotationssymmetrischem Außenumfang in der Durchgangsbohrung 20a verschiebbar gelagert und mittels eines in einer Außennut 32a der Kunststoffbüchse 32 befindlichen, elastischen Dichtringes 34 abgedichtet.

An dem Stellkolben 16a der Gangstelleinheit 16 ist ein hakenförmiges Verbindungsteil 36 befestigt, das in eine durchgehende Ausnehmung 38 der Schaltstange 24 in Verschieberichtung formschlüssig eingreift. Die Rastierung der Schaltstange 24 in eine mittlere Neutralstellung und in zwei entgegengerichtete Schaltstellungen ist nicht dargestellt.

Zwischen den Anschlussmitteln 36, 38 der Schaltstange 24 an der Gangstelleinheit 16 und der Querwand 20 des Getriebegehäuses 22 sind an der Schaltstange 24 an deren Schmalseite (auf der Zeichnung Fig. 2 nach unten abragend) zwei Positionsgeber 40, 42 in Form von Permanentmagneten über ein Polblech 44 unmittelbar befestigt. Eine dünnwandige Schutzkappe 46 deckt die Positionsgeber 40, 42 ab.

Die Anordnung der Positionsgeber 40, 42 insgesamt ist so ausgeführt, dass die Positionsgeber 40, 42 mit Polblech 44 und Schutzkappe 46 durch die Durchgangsbohrung 20a in der Querwand 20 von dem Getrieberaum 18 in den Getrieberaum 14 als Vormontageeinheit einschiebbar und anschließbar ist. Die Positionsgeber 40, 42 liegen dabei gehäusefest im Getrieberaum 14 angeordneten Positionssensoren 48, 50 einer nicht dargestellten, elektrischen Gangerkennungsschaltung in einer definierten Messebene 52 (gestrichelte Linie) gegenüber.

Das Polblech 44 weist eine durchgehende, nicht rotationssymmetrische Ausnehmung 44a auf, die formschlüssig mit einem korrespondierenden Vorsprung 24a an der Schaltstange 24 zusammenwirkt.

Das die Permanentmagneten 40, 42 tragende Polblech 44 ist mit der Schaltstange 24 zur Herstellung einer festen Verbindung im Bereich des Vorsprunges 24a verstemmt und zusätzlich durch Aufbringen eines Klebstoffes an den Kontaktflächen zwischen Polblech 44 und Schaltstange 24 verklebt.

Alternativ kann das Polblech 44 auch mit der Schaltstange 24 z. B. durch Laserschweißen verschweißt sein.

Ferner kann das Polblech 44 mit den Permanentmagneten 40, 42 mit Kunststoff ummantelt und somit fest mit der Schaltstange 24 verbunden sein. Besonders kostengünstig kann diese z. B. büchsenförmige Ummantelung einteilig mit der Kunststoffbüchse 32, also in einem einheitlichen Arbeitsgang, hergestellt sein (nicht dargestellt).

Bei einem automatisierten Wechselgetriebe 12 mit sechs Vorwärtsgängen können drei Schaltstangen 24 für die Vorwärtsgänge und eine Schaltstange 24 für einen Rückwärtsgang des Wechselgetriebes 12 durch die ölraumtrennende Querwand 20 in entsprechenden Durchgangsbohrungen 20a hindurchgeführt sein, wobei die jeweils unmittelbar befestigten Positiongeber 40, 42 mit Polblech 44 im wesentlichen in der besagten, einheitlichen Messebene 52 der gehäusefesten Positionssensoren 48, 50 liegen können. Damit können gegebenenfalls sämtliche Positionssensoren 48, 50 in einem einheitlichem Gehäuse (nicht dargestellt) angeordnet und in einfacher Weise in das Getriebegehäuse 22 bzw. in den Getrieberaum 14 montiert werden.

Die Durchgangsbohrung 20a in der Querwand 20 kann auch durch eine in die Durchgangsbohrung 20a eingesetzte Lagerbüchse aus Stahl (nicht dargestellt) gebildet sein, in der die auf die Schaltstange 24 aufgespritzte Kunststoffbüchse 32 entsprechend gleitet.

## Patentansprüche

1. Anordnung von Positionsgebern an einer Schaltstange für automatisierte Geschwindigkeits-Wechselgetriebe in Kraftfahrzeugen, die mit gehäusefesten Positionssensoren einer elektrischen Gangerkennungsschaltung zusammenwirken, wobei die zumindest eine Schaltstange an ihren Endbereichen in Querwänden des Gehäuses des Wechselgetriebes verschiebbar gelagert und mittels einer vorzugsweise elektrohydraulisch gesteuerten Gangstelleinheit betätigt ist, **dadurch gekennzeichnet, dass** die Schaltstange (24) durch eine Durchgangsbohrung (20a) in einer ölraumtrennenden Querwand (20) des Wechselgetriebes (12) in einen zumindest die Gangstelleinheit (16) und die Positionssensoren (48, 50) aufnehmenden Getrieberaum (14) einragt, und dass die Positionsgeber (40, 42, 44) an der Schaltstange (24) derart unmittelbar befestigt sind, dass die Schaltstange (24) mit den Positionsgebern (40, 42, 44) durch die Durchgangsbohrung (20a) hindurch als Montageeinheit montierbar ist.

2. Anordnung nach Anspruch 1, **dadurch gekennzeichnet, dass** die Schaltstange (24) in der Durchgangsbohrung (20a) der Querwand (20) mittels einer aufgespritzten Kunststoffbüchse (32) verschiebbar gelagert und abgedichtet ist.

3. Anordnung nach Anspruch 1 oder 2, **dadurch gekennzeichnet, dass** die Positionsgeber (40, 42, 44) zwischen endseitigen Anschlussmitteln (36, 38) der Schaltstange (24) an der Gangstelleinheit (16) und der Querwand (20) vorgesehen sind.

4. Anordnung nach einem der vorhergehenden Ansprüche, **dadurch gekennzeichnet, dass** die Positionsgeber zwei Permanentmagnete (40, 42) gebildet sind, die auf einem gemeinsamen Polblech (44) angeordnet sind, das formschlüssig über eine Ausnehmung (44a) mit einem an der Schaltgabel (24) ausgebildeten Vorsprung (24a) zusammenwirkt.

5. Anordnung nach Anspruch 4, **dadurch gekennzeichnet, dass** eine mit dem Polblech (44) verbundene, dünnwandige Schutzkappe (46) die Permanentmagnete (40, 42) abdeckt.

6. Anordnung nach Anspruch 4 oder Anspruch 5, **dadurch gekennzeichnet, dass** das Polblech (44) der Positionsgeber (40, 42) mit der Schaltstange (24) verschweißt ist.

7. Anordnung nach Anspruch 4 oder Anspruch 5, **dadurch gekennzeichnet, dass** das Polblech (44) der Positionsgeber (40, 42) mit der Schaltstange (24) verklebt ist.

8. Anordnung nach Anspruch 4 oder Anspruch 5, **dadurch gekennzeichnet, dass** das Polblech (44) der Positionsgeber (40, 42) mit der Schaltstange (24) im Bereich des Vorsprunges (24a) verstemmt ist.

9. Anordnung nach Anspruch 4 oder Anspruch 5, **dadurch gekennzeichnet, dass** die Positionsgeber (40, 42) an der Schaltstange (24) durch Umspritzen mit einer Kunststoffummantelung gehalten sind.

10. Anordnung nach Anspruch 9, **dadurch gekennzeichnet, dass** die Kunststoffummantelung einstückig mit der Kunststoffbüchse (32) zur Lagerung der Schaltstange (24) in der Querwand (20) ausgeführt ist.

11. Anordnung nach einem der Ansprüche 1 bis 3, **dadurch gekennzeichnet, dass** die Positionsgeber durch lokale, magnetisierte Schaltstangenbereiche gebildet sind.

12. Anordnung nach einem der Ansprüche 1 bis 3, **dadurch gekennzeichnet, dass** die Positionsgeber lokal durch Anspritzen eines Magnetpartikel enthaltenden Kunststoffmaterials gebildet sind.

13. Anordnung nach einem der vorhergehenden Ansprüche, **dadurch gekennzeichnet, dass** die Schaltstange (24) im Querschnitt bevorzugt rechteckförmig ausgeführt ist, und dass die Positonsgeber (40, 42, 44) an einer Schmalseite der Schaltstange (24) ausgebildet sind.

14. Anordnung nach einem der vorhergehenden Ansprüche, **dadurch gekennzeichnet, dass** mehrere Schaltstangen (24) für Vorwärtsgänge und für wenigstens einen Rückwärtsgang des Wechselgetriebes (12) durch die ölraumtrennende Querwand (20) in entsprechenden Durchgangsbohrungen (20a) hindurchgeführt sind und dass die jeweils unmittelbar befestigten Positiongeber (40, 42, 44) im wesentlichen in einer einheitlichen Messebene (52) der gehäusefesten Positionssensoren (48, 50) liegen.

## Claims

1. Arrangement of position transmitters on a selector rod for the automated speed change-gear transmissions in motor vehicles, which position transmitters cooperate with housing-fixed position sensors of an electrical gear detection circuit, the at least one selector rod being mounted displaceably at its end regions in transverse walls of the housing of the change-gear transmission and being actuated by means of a preferably electrohydraulically controlled gear-setting unit, **characterized in that** the selector rod (24) projects through a passage bore (20a) in an oil space-separating transverse wall (20) of the change-gear transmission (12) into a transmission space (14) and receiving at least the gear-setting unit (16) and the position sensors (48, 50), and **in that** the position transmitters (40, 42, 44) are fastened directly on the selector rod (24) in such a way that the selector rod (24), together with the position transmitters (40, 42, 44), can be mounted as a mounting unit through the passage bore (20a).

2. Arrangement according to Claim 1, **characterized in that** the selector rod (24) is mounted displaceably and sealed off in the passage bore (20a) of the transverse wall (20) by means of a plastic bush (32) injection-moulded on.

3. Arrangement according to Claim 1 or 2, **characterized in that** the position transmitters (40, 42, 44) are provided between end-face means (36, 38) of connection of the selector rod (24) to the gear-setting unit (16) and the transverse wall (20).

4. Arrangement according to one of the preceding claims, **characterized in that** the position transmitters are formed by two permanent magnets (40, 42) which are arranged on one common pole plate (44) which cooperates positively, via a recess (44a), with a projection (24a) formed on the selector fork (24).

5. Arrangement according to Claim 4, **characterized in that** a thin-walled protective cap (46) connected to the pole plate (44) covers the permanent magnets (40, 42).

6. Arrangement according to Claim 4 or Claim 5, **characterized in that** the pole plate (44) of the position transmitters (40, 42) is welded to the selector rod (24).

7. Arrangement according to Claim 4 or Claim 5, **characterized in that** the pole plate (44) of the position transmitters (40, 42) is adhesively bonded to the selector rod (24).

8. Arrangement according to Claim 4 or Claim 5, **characterized in that** the pole plate (44) of the position transmitters (40, 42) is caulked with the selector rod (24) in the region of the projection (24a).

9. Arrangement according to Claim 4 or Claim 5, **characterized in that** the position transmitters (40, 42) are held on the selector rod (24) by having a plastic sheathing injection-moulded around them.

10. Arrangement according to Claim 9, **characterized in that** the plastic sheathing is produced in one piece with the plastic bush (32) for mounting the selector rod (24) in the transverse wall (20).

11. Arrangement according to one of Claims 1 to 3, **characterized in that** the position transmitters are formed by local magnetized selector-rod regions.

12. Arrangement according to one of Claims 1 to 3, **characterized in that** the position transmitters are formed locally **in that** a plastic material containing magnetic particles is injection-moulded on.

13. Arrangement according to one of the preceding claims, **characterized in that** the selector rod (24) is preferably of rectangular design in cross section, and **in that** the position transmitters (40, 42, 44) are formed on a narrow side of the selector rod (24).

14. Arrangement according to one of the preceding claims, **characterized in that** a plurality of selector rods (24) for forward gears and for at least one reverse gear of the change-gear transmission (12) are led through the oil space-separating transverse wall (20) into corresponding passage bores (20a), and **in that** the in each case directly fastened position transmitters (40, 42, 44) lie essentially in a unitary measurement plane (52) of the housing-fixed position sensors (48, 50).

## Revendications

1. Agencement de transmetteurs de position disposés sur une tringle de changement de vitesse pour des boîtes de vitesses à changement de vitesse automatisé dans des véhicules automobiles, qui coopèrent avec des capteurs de position fixés au boîtier, d'un circuit électrique de reconnaissance de rapports, l'au moins une tringle de changement de vitesse étant montée de manière déplaçable au niveau de ses parties d'extrémité dans des parois transversales du boîtier de la boîte de vitesses et étant actionnée au moyen d'une unité de commande de rapports commandée de préférence de manière électrohydraulique, **caractérisé en ce que** la tringle de changement de vitesse (24) pénètre à travers un alésage traversant (20a) dans une paroi transversale (20) de séparation d'un carter d'huile de la boîte de vitesses (12) dans un espace de boîte de vitesses (14) recevant au moins l'unité de commande de rapports (16) et les capteurs de position (48, 50), et **en ce que** les transmetteurs de position (40, 42, 44) sont fixés directement sur la tringle de changement de vitesse (24) de telle sorte que la tringle de changement de vitesse (24) puisse être montée avec les transmetteurs de position (40, 42, 44) à travers l'alésage traversant (20a) sous forme d'unité de montage.

2. Agencement selon la revendication 1, **caractérisé en ce que** la tringle de changement de vitesse (24) est montée de manière déplaçable et est rendue étanche dans l'alésage traversant (20a) de la paroi transversale (20) au moyen d'une douille en plastique pulvérisée (32).

3. Agencement selon la revendication 1 ou 2, **caractérisé en ce que** les transmetteurs de position (40, 42, 44) sont prévus entre des moyens de raccordement du côté de l'extrémité (36, 38) de la tringle de changement de vitesse (24) sur l'unité de commande de rapports (16) et la paroi transversale (20).

4. Agencement selon l'une quelconque des revendications précédentes, **caractérisé en ce que** les transmetteurs de position sont formés par deux aimants permanents (40, 42), qui sont disposés sur une tôle polaire commune (44) qui coopère par engagement par correspondance géométrique par le biais d'un évidement (44a) avec une saillie (24a) réalisée sur la fourchette de sélection (24).

5. Agencement selon la revendication 4, **caractérisé en ce qu'**un capuchon de protection (46) à parois minces, connecté à la tôle polaire (44), recouvre les aimants permanents (40, 42).

6. Agencement selon la revendication 4 ou la revendication 5, **caractérisé en ce que** la tôle polaire (44) des transmetteurs de position (40, 42) est soudée à la tringle de changement de vitesse (24).

7. Agencement selon la revendication 4 ou la revendication 5, **caractérisé en ce que** la tôle polaire (44) des transmetteurs de position (40, 42) est collée à la tringle de changement de vitesse (24).

8. Agencement selon la revendication 4 ou la revendication 5, **caractérisé en ce que** la tôle polaire (44) des transmetteurs de position (40, 42) est matée avec la tringle de changement de vitesse (24) dans la région de la saillie (24a).

9. Agencement selon la revendication 4 ou la revendication 5, **caractérisé en ce que** les transmetteurs de position (40, 42) sont maintenus sur la tringle de changement de vitesse (24) par surmoulage avec une gaine de plastique.

10. Agencement selon la revendication 9, **caractérisé en ce que** la gaine de plastique est réalisée d'une seule pièce avec la douille en plastique (32) pour le support de la tringle de changement de vitesse (24) dans la paroi transversale (20).

11. Agencement selon l'une quelconque des revendications 1 à 3, **caractérisé en ce que** les transmetteurs de position sont formés par des zones de tringle de changement de vitesse locales magnétiques.

12. Agencement selon l'une quelconque des revendications 1 à 3, **caractérisé en ce que** les transmetteurs de position sont formés localement par moulage d'un matériau en plastique contenant des particules aimantées.

13. Agencement selon l'une quelconque des revendications précédentes, **caractérisé en ce que** la tringle de changement de vitesse (24) est réalisée avec une section transversale de préférence de forme rectangulaire, et **en ce que** les transmetteurs de position (40, 42, 44) sont réalisés sur un côté étroit de la tringle de changement de vitesse (24).

14. Agencement selon l'une quelconque des revendications précédentes, **caractérisé en ce que** plusieurs tringles de changement de vitesse (24) pour des vitesses de marche avant et pour au moins une vitesse de marche arrière de la boîte de vitesses (12) sont guidées à travers la paroi transversale (20) de séparation de l'espace d'huile dans des alésages traversants correspondants (20a) et **en ce que** les transmetteurs de position respectifs (40, 42, 44) fixés directement se situent essentiellement dans un plan de mesure unitaire (52) des capteurs de position fixés au boîtier (48, 50).
